# EUROPÄISCHE PATENTSCHRIFT

(11) **EP 1 470 320 B1**
(45) Veröffentlichungstag und Bekanntmachung des Hinweises auf die Patenterteilung: **01.12.2010**
(21) Anmeldenummer: 03700040.3
(22) Anmeldetag: 15.01.2003
(51) Int. Cl.: F01D 25/28, F02C 6/12

(54) **BEFESTIGUNGSVORRICHTUNG FÜR EINEN TURBOLADER**
FIXING DEVICE FOR A TURBO-SUPERCHARGER
DISPOSITIF DE FIXATION POUR UN TURBOCOMPRESSEUR

(30) Priorität: 29.01.2002 EP 02405052
(43) Veröffentlichungstag der Anmeldung: 27.10.2004
(73) Patentinhaber: ABB Turbo Systems AG, 5400 Baden (CH)
(72) Erfinder: BÄTTIG, Josef, CH-5704 Egliswil (CH)
(74) Vertreter: ABB Patent Attorneys
(86) Internationale Anmeldenummer: PCT/CH2003/000018
(87) Internationale Veröffentlichungsnummer: WO 2003/064819

(56) Entgegenhaltungen:
- EP-A- 0 785 389
- DE-A- 3 641 478
- DE-A- 4 432 073
- US-A- 3 891 345

## Beschreibung

### Technisches Gebiet

Die Erfindung betrifft eine Befestigungsvorrichtung für Turbolader gemäss den Merkmalen des Oberbegriffs des Patentanspruches 1.

### Stand der Technik

Befestigungsvorrichtungen für Turbolader müssen verschiedene Aufgaben übernehmen. Dabei gibt es Befestigungsvorrichtungen mit nur einem Fuss und solche mit zwei Füssen. Vorteil von Befestigungsvorrichtungen mit zwei Füssen ist, dass die für Wartungsarbeiten nötige Demontage und Montage in der Regel einfacher und schneller geht, als bei Befestigungsvorrichtung mit nur einem Fuss.

Bei Befestigungsvorrichtungen mit zwei Füssen sind die Füsse axial voneinander beabstandet am Turbolader angeordnet und am Untergrund befestigbar. Sie dienen der Abstützung und Fixierung des Turboladers gegenüber dem Untergrund, der Aufnahme von Schwingungen des Turboladers, so dass diese nicht voll auf den Untergrund übertragen werden und dem Ausgleich von thermisch bedingten Dilatationen des Turboladergehäuses. Für die Aufnahme der Schwingungen sollten die Füsse ein hohe Steifigkeit aufweisen, während für den Ausgleich der Gehäusedilatationen wenigstens in axialer Richtung eine gewisse Flexibilität zumindest eines Fusses nötig ist. Demnach finden sich in der Literatur Befestigungsvorrichtungen mit Füssen, die etwa gleich steif bzw. flexibel ausgebildet sind, wie beispielsweise in dem Prospekt "The Range of ABB Turbochargers" von ABB Turbo Systems Ltd., No. CH-Z 2008 97 E, Abbildung 203 044 VTR: The Classic und Abbildung 226 874 VTC: The Compact, aber auch Befestigungsvorrichtungen, bei denen einer der beiden Füsse als Hauptfuss sehr steif und der andere der beiden Füsse als Hilisfuss mit hoher axialer Flexibilität ausgebildet ist, wie dies z.B. im Prospekt von Mitsubishi Heavy Industries, Ltd. H420-42TU11 E1-A-0, (1,0) 98-3 R, S. 6, und in DE-A1-199 25 684 gezeigt ist. US-A 3,891,345 sowie EP-A 0 785 389 offenbaren Befestigungsvorrichtungen gemäβ den Stand der Technik.

Ist der Turbolader auf einem Motor angeordnet, so muss die Befestigungsvorrichtung eine weitere Aufgabe übernehmen. Sie muss verhindern, dass der Turbolader durch die Motorschwingungen zu Eigenfrequenzschwingungen angeregt wird. Bei den oben beschriebenen Befestigungsvorrichtungen, hat sich gezeigt, dass die Eigenfrequenz des Turboladers unglücklicherweise etwa im Bereich der Motorzündfrequenzen liegt und die Befestigungsvorrichtung eine Anregung in der Eigenschwingungsfrequenz oft nicht wirksam verhindern kann. Um eine solch Anregung zu verhindern, müssten die Füsse der bekannten Befestigungsvorrichtung massiv verstärkt werden, was höhere Materialkosten und ein höheres Gewicht zu folge hätte.

### Darstellung der Erfindung

Aufgabe der Erfindung ist es daher, eine Befestigungsvorrichtung der eingangs genannten Art zu schaffen, welche die Anregung eines Turboladers zu Eigenfrequenzschwingungen via den Untergrund wirksam verhindert.

Diese Aufgabe löst eine Befestigungsvorrichtung mit den Merkmalen des Patentanspruches 1.

Die erfindungsgemässe Befestigungsvorrichtung umfasst einen ersten und einen zweiten Fuss, die am Untergrund befestigt werden können und in üblicherweise axial voneinander beabstandet mit dem Turbolader verbunden sind. Erfindungsgemäss weist der zweite Fuss einen Gehäuseverbindungsbereich auf, der mit dem Turboladergehäuse verbindbar ist und in Form zumindest eines Teilkreisbogens ausgebildet ist. Weiter weist der zweite Fuss einen axial vom Gehäuseverbindungsbereich beabstandeten Untergrundverbindungsbereich auf, der mit dem Untergrund verbindbar ist, und mittels einer Axialverstrebung mit dem Gehäuseverbindungsbereich verbunden ist. Die Axialverstrebung schliesst mit dem Untergrund einen Winkel α ein, der im Bereich von 0° bis 60 ° liegt. Durch diese spezielle Ausgestaltung des zweiten Fusses, wird dessen Steifigkeit massiv erhöht und damit die Eigenfrequenz eines mit dieser Befestigungsvorrichtung an einem Untergrund befestigten Turboladers zu höheren Frequenzen verschoben. Die Eigenfrequenz eines so befestigten Turboladers liegt dann ausserhalb des Frequenzbereichs der typischerweise bei Motoren auftretenden Zündfrequenzen, so dass eine Anregung zur Eigenfrequenzschwingungen durch Motoren wirksam verhindert werden kann.

Besonders einfach ist der zweite Fuss mit dem Turboladergehäuse verbindbar, wenn das Turboladergehäuse einen Verbindungsflansch aufweist, der im wesentlichen den gleichen Radius aufweist wie der Kreisbogen oder Teilkreisbogen des Gehäuseverbindungsbereiches, so dass der Verbindungsflansch und der Gehäuseverbindungsbereich formschlüssig ineinander greifen. Der Gehäuseverbindungsbereich weist dazu vorteilhaft einen kreisbogenförmigen Anschlag auf. Der Gehäuseverbindungsbereich und das Turboladergehäuse werden schliesslich mittels gleichmässig über den Teilkreis- oder Kreisbogen verteilten Fixierelementen, das können z.B. Schrauben sein, gegeneinander fixiert.

In einer besonders bevorzugten, weil sehr steifen Ausführungsform beschreibt der Gehäuseverbindungsbereich einen Teilkreisbogen von 180° ± 30°. Denkbar ist auch ein Vollkreisbogen, der ebenfalls gute Steifigkeitswerte für den zweiten Fuss ergibt, allerdings die Zugänglichkeit zum Turboladergehäuse eventuell unnötig einschränkt. Besonders Vorteilhaft ist es, wenn der Untergrundverbindungsbereich auf der dem ersten Fuss entgegengesetzten Seite des Gehäuseverbindungsbereichs angeordnet ist. Dies ergibt für die Befestigungsvorrichtung eine grössere Standfläche und ist auch für die Montage einfacher.

Weist der zweite Fuss Seitenverstrebungen auf, welche beidseitig der Längsachse des Turboladers tangential am kreisbogenförmigen Gehäuseverbindungsbereich angreifen und sich, eine Abstützung bildend, bis zum Untergrund erstrecken, so erhöht dies die Steifigkeit des Fusses. Ganz besonders gute Ergebnisse werden erzielt, wenn die Seitenverstrebungen nicht nur vom Gehäuseverbindungsbereich zum Untergrund reichen sondern den Gehäuseverbindungsbereich auch mit dem Untergrundverbindungsbereich verbinden. Am einfachsten ist dies mit plattenförmig ausgebildeten Seitenverstrebungen möglich. Für Gewichts- und Materialeinsparungen können die Platten Durchbrüche aufweisen oder die Seitenverstrebungen sind in Form von Streben oder Gittern ausgebildet.

Ist die Axialverstrebung seitlich jeweils über ihre gesamte axiale Länge mit der jeweiligen Seitenverstrebung verbunden, so erhöht dies die Steifigkeit weiter und verschiebt die Eigenfrequenz des mit der Befestigungsvorrichtung befestigten Turboladers zu noch höheren Frequenzen.

In einer besonders bevorzugten weil sehr steifen Ausführungsform ist die Axialverstrebung in Form einer schalenartigen Verstrebungsplatte ausgebildet. Der Querschnitt dieser Verstrebungsplatte zeichnet im Gehäuseverbindungsbereich den Teilkreis- oder Kreisbogen des Gehäuseverbindungsbereichs nach und beschreibt im Bereich das Untergrundverbindungsbereichs vorzugsweise etwa eine Gerade. Wie die Seitenverstrebung so kann auch diese Verstrebungsplatte Durchbrüche aufweisen um Material einzusparen, es ist aber auch hier denkbar die Axialverstrebungen in Form von Streben oder Gittern auszubilden.

Ist der zweite Fuss mit Hilfe von Befestigungsmitteln derart mit dem Untergrund verbunden, dass der zweite Fuss gegenüber dem Untergrund zumindest axial im Bereich eines definierten Weges verschiebbar ist, so kann der Fuss trotz grosser Steifigkeit thermisch bedingte Gehäusedilatationen des Turboladergehäuses wirksam aufnehmen. Der erste Fuss ist im Gegensatz dazu ortsfest am Untergrund fixiert, so dass der ersten Fuss sozusagen den 0-Punkt der Turboladerposition gegenüber dem Untergrund festgelegt.

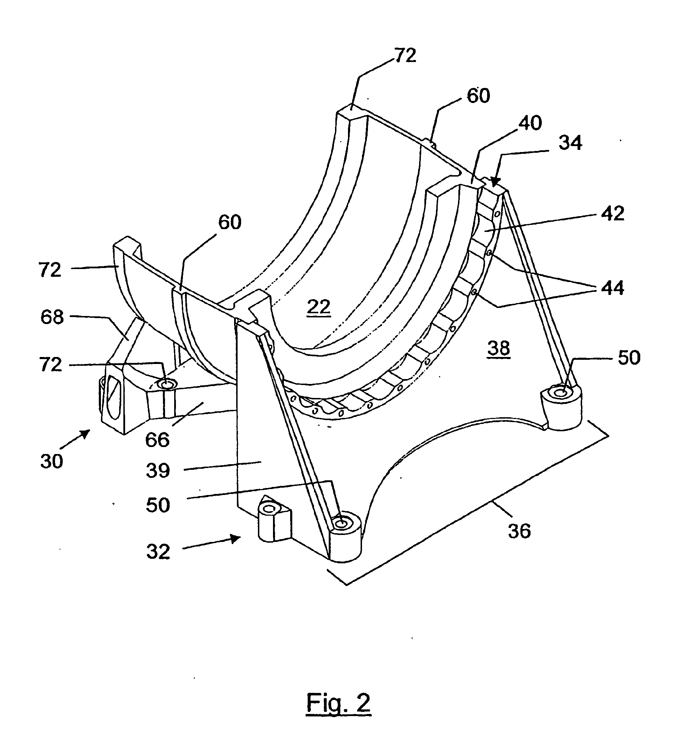

Am einfachsten ist eine mit einem Verschiebeweg behaftete Verbindung mit dem Untergrund, wie sie für den Zweiten Fuss vorgesehen ist, zu realisieren, indem im Untergrundverbindungsbereich Aufnahmeöffnungen vorgesehen sind, die für die spielbehaftete Aufnahme eines Befestigungsmittels ausgebildet sind, wobei das Befestigungsmittel ein im Untergrund fixierbares Befestigungselement und einen das Befestigungselement umgebenden Gleitschuh umfasst. Beispiele für die Ausbildung solcher Befestigungsmittel mit Befestigungselement und Gleitschuh sind in der am 26.7.2000 eingereichten EP-Anmeldung Nr. 00810663.5. Fig. 2a bis 6b und der zugehörigen Beschreibung offenbart.

Bei einem Turbolader mit einem Turboladergehäuse, das entlang seiner Längsachse ein Verdichtergehäuse und ein Turbinengehäuse mit einem Gasaustrittsgehäuse und einem Gaseintrittsgehäuse umfasst, ist es besonders vorteilhaft die erfindungsgemässe Befestigungsvorrichtung derart anzubringen, dass der zweite Fuss in Richtung Turbinengehäuse beabstandet vom ersten Fuss angeordnet ist. Für die Montage und Demontage ist es das einfachste, wenn der zweite Fuss turbinenseitig mit dem Gasaustrittsgehäuse verbunden ist. Der erste Fuss ist dann mit Vorteil verdichterseitig mit dem Gasaustrittsgehäuse verbunden.

In einer besonders bevorzugten Ausführungsform weist der erste Fuss für die Verbindung mit dem Gasaustrittsgehäuse ein Verbindungselement auf, welches etwa axial in der Mitte des Gasaustrittsgehäuses mit diesem verbunden werden kann und das Gasaustrittsgehäuse axial fixiert. Vorteilhaft ist das Verbindungselement verdichterseitig mit einem Aufnahmesattel verbunden, auf dem die Verdichterseite des Gasaustrittsgehäuses verschiebbar gelagert und gegen den Untergrund abgestützt ist. Auf diese Weise stützt der erste Fuss den Turbolader nicht nur an einem Ort sondern an zwei diskreten Orten ab und ist gleichzeitig in der Lage thermisch bedingte Gehäusedilatation des Turboladers aufzunehmen ohne, dass es zu Spannungen im Material kommt.

Es ist aber auch möglich, den ersten Fuss als einen herkömmlichen Lagerfuss, wie er beispielsweise in H420-42TU11 E1-A-0, (1,0) 98-3 R, S. 6, und in DE-A1-199 25 684 gezeigt ist, auszubilden.

Weitere bevorzugte Ausführungsformen sind Gegenstand weiterer abhängigen Patentansprüche.

### Kurze Beschreibung der Zeichnungen

Im folgenden wird der Erfindungsgegenstand anhand von bevorzugten Ausführungsbeispielen, welche in den beiliegenden Zeichnungen dargestellt sind, näher erläutert. Es zeigen rein schematisch:
- Fig. 1: in Seitenansicht einen Turbolader entlang seiner Längsachse mit erfindungs- gemässer Befestigungsvorrichtung, wobei die Befestigungsvorrichtung im Schnitt dargestellt ist;
- Fig. 2: die erfindungsgemässe Befestigungsvorrichtung perspektivisch und vergrös- sert in einem horizontalen Schnitt durch das Gasaustrittsgehäuse des Turbo- laders aus Fig. 1;
- Fig. 3: perspektivisch, schräg von unten einen der beiden zur Befestigungsvorrich- tung aus Fig. 1 gehörenden Füsse;
- Fig. 4: perspektivisch, schräg von oben den anderen Fuss der Befestigungsvorrich- tung aus Fig. 1; und
- Fig. 5: in einer zur Fig. 1 analogen Darstellung eine zweite Ausführungsform der er- findungsgemässen Befestigungsvorrichtung.

Die in den Zeichnungen verwendeten Bezugszeichen und deren Bedeutung sind in der Bezugszeichenliste zusammengefasst aufgelistet. Grundsätzlich sind in den Figuren gleiche Teile mit gleichen Bezugszeichen versehen. Die beschriebene Ausführungsform steht beispielhaft für den Erfindungsgegenstand und hat keine beschränkende Wirkung.

### Wege zur Ausführung der Erfindung

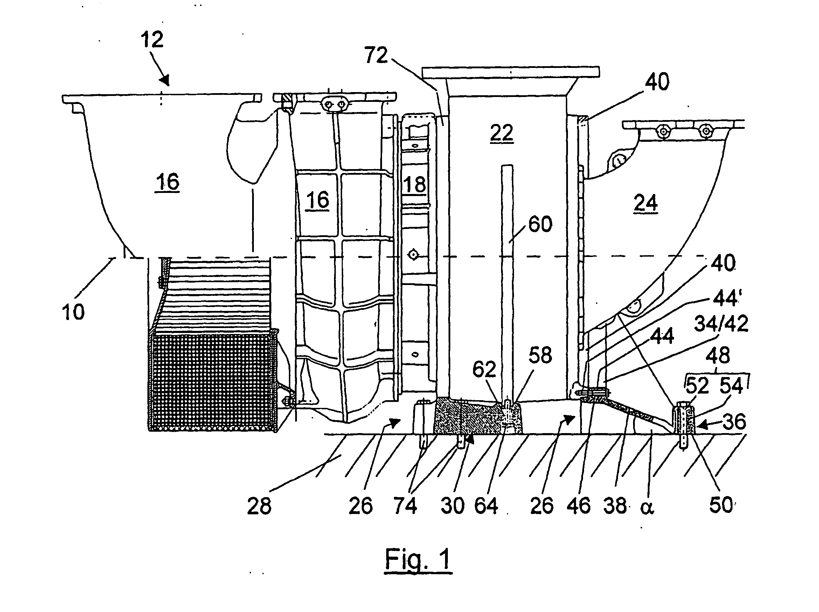

Figur 1 zeigt in Seitenansicht entlang seiner Längsachse 10 einen Turbolader 12 mit einem Turboladergehäuse 14, das entlang der Längsachse 10 ein Verdichtergehäuse 16, ein Lagergehäuse 18 und ein Turbinengehäuse 20 umfasst. Das Turbinengehäuse 20 weist seinerseits ein Gasaustrittsgehäuse 22 und ein Gaseintrittsgehäuse 24 auf. Der Turbolader 12 ist mittels einer erfindungsgemässen Befestigungsvorrichtung 26 an einem Untergrund 28 befestigt. Die Befestigungsvorrichtung 26 weist einen ersten im Untergrund fixierbaren Fuss 30 und axial davon beabstandet einen zweiten im Untergrund fixierbaren Fuss 32 auf. Die Füsse sind jeweils mit dem Turboladergehäuse 14 verbunden, und zwar jeweils am Gasaustrittsgehäuse 22, wobei der erste Fuss 30 verdichterseitig und der zweite Fuss 32 turbinenseitig am Gasaustrittsgehäuse 22 angeordnet ist.

Wie aus den Fig. 1, 2 und 3 erkennbar weist der zweite Fuss 32 für die Verbindung mit dem Turboladergehäuse 14 einen Gehäuseverbindungsbereich 34 auf, der in diesem Beispiel als Teilkreisbogen mit 180° Bogenlänge ausgebildet ist. Statt eines Teilkreisbogens ist aber auch ein Vollkreisbogen denkbar, wobei die Zugänglichkeit es Turboladers 12 durch eine solche Ausgestaltung unter Umständen zu sehr eingeschränkt sein kann. Für eine gute Steifigkeit ist ein Teilkreisbogen von 180°±30° ideal, aber auch mit einem Teilkreisbogen von etwa 90° kann bei geringeren Anforderungen noch eine ausreichende Steifigkeit erreicht werden. Axial beabstandet vom Gehäuseverbindungsbereich 34 ist ein Untergrundverbindungsbereich 36 angeordnet, der mit dem Untergrund 28 verbindbar ist. In dem gezeigten Beispiel weist der Untergrundverbindungsbereich 36 eine Ausdehnung quer zur Längsachse 10 des Turboladers 14 auf, die etwa dem zweifachen Radius des Teilkreis- oder Kreisbogens des Gehäuseverbindungsbereichs 34 entspricht. Diese Abmessungen können aber auch etwas grösser oder kleiner sein, je nach dem vorhandenen Platzangebot und den Steifigkeitsanforderungen.

Eine Axialverstrebung 38 verbindet die beiden Verbindungsbereiche 34, 36 miteinander und schliesst mit dem Untergrund 28 einen Winkel α ein, der in diesem Beispiel im Bereich von etwa 25° bis 30° liegt. Um eine gute Steifigkeit zu erreichen kann dieser Winkel α zwischen 0° und 60° betragen, d.h. auch eine parallel zum Untergrund 28 verlaufende Axialverstrebung 38 ist denkbar und erfüllt die gesetzten Anforderungen. Dazu muss allerdings der Untergrundverbindungsbereich 36 derart ausgestaltet sein, dass die Axialverstrebung 38 etwa in gleicher Distanz zum Untergrund 28, in der sie mit dem Gehäuseverbindungsbereich 34 am Turboladergehäuse 14 angreift auch am Untergrundverbindungsbereich 36 angreifen kann. Die Axialverstrebung 38 ist in dem gezeigten Beispiel als Verstrebungsplatte ausgebildet. Sie kann aber auch in Form von Einzelstreben oder in Form eines Gitters verwirklicht werden.

Der Gehäuseverbindungsbereich 34 und der Untergrundverbindungsbereich 36 sind bei dem gezeigten zweiten Fuss 32 zusätzlich seitlich mit je einer Seitenverstrebung 39 verbunden. Diese Seitenverstrebung 39 greift tangential an dem kreisbogenförmigen Gehäuseverbindungsbereich 34 an und reicht bis zum Untergrund 28. Im gezeigten Beispiel ist die Seitenverstrebung 39 in Form einer etwa dreieckigen Platte ausgestaltet. Sie kann aber, wie die Axialverstrebung 38 auch in Form von Einzelstreben oder in Form eines Gitters ausgebildet sein.

Wie in den Fig. 1 und 2 dargestellt, weist das Gasaustrittsgehäuse 22 an seiner turbinenseitigen Stirnwand einen Verbindungsflansch 40 auf, der den gleichen Radius hat wie der Gehäuseverbindungsbereich 34 des zweiten Fusses 32. In dem gezeigten Beispiel beschreibt der Verbindungsflansch 40 einen Vollkreis. Dies ist besonders günstig, weil so der zweite Fuss 32 in beliebiger Position zum Gehäuse am Verbindungsflansch befestigt werden kann. Der zweite Fuss 32 weist hierfür in seinem Gehäuseverbindungsbereich 34 einen Anschlag 42 auf, so dass zur Verbindung des zweiten Fusses 32 mit dem Turboladergehäuse 14 der Verbindungsflansch 40 und der Gehäuseverbindungsbereich 34 mit seinem Anschlag 42 formschlüssig ineinandergreifen. Gleichmässig über den Teilkreis- oder Kreisbogen des Gehäuseverbindungsbereiches 34 verteilt, sind Öffnungen 44 vorgesehen, die mit weiteren Öffnungen 44' im Verbindungsflansch 40 korrespondieren und Fixierelemente 46 aufnehmen. Mit Hilfe der Fixierelemente 46, in diesem Fall Schrauben, sind die beiden Teile gegeneinander fixiert. Im gezeigten Beispiel sind die Öffnungen 44, 44' im Anschlag 42 des Gehäuseverbindungsbereichs 34 bzw. im Verbindungsflansch 40 angeordnet, dies hat den Vorteil, dass eine grössere Materialdicke im Bereich der Öffnungen 44, 44' vorhanden ist. Die Öffnungen 44, 44' können aber auch direkt im Gehäuseverbindungsbereich 34 bzw. im Turboladergehäuse 14 angeordnet sein. Auch kann der Verbindungsflansch 40 statt auf der Stirnseite des Gasaustrittsgehäuses 22 auf seinem Umfang angeordnet sein und der Anschlag 42 entsprechend anders ausgestaltet oder ganz weggelassen sein.

Ist der Gehäuseverbindungsbereich 34 als geschlossener Kreisbogenflansch ausgestaltet so ist es denkbar, diesen Flansch zwischen Gasaustrittsgehäuse 22 und Gaseintrittsgehäuse 24 einzuspannen (nicht gezeigt), und den zweiten Fuss 32 auf diese Weise mit dem Turboladergehäuse 14 zu verbinden.

Damit der zweite Fuss thermische Dilatationen des Turboladergehäuses 14 aufnehmen kann, ist er in dem hier gezeigten Beispiel mit Hilfe von Befestigungsmitteln 48 derart mit dem Untergrund 28 verbunden, dass er gegenüber dem Untergrund 28 im Bereich eines definierten Weges verschiebbar ist. Dazu weist der Untergrundverbindungsbereich 36 Aufnahmeöffnungen 50 zur Aufnahme je eines Befestigungsmittels 48 auf. Jedes Befestigungsmittel 48 umfasst ein Befestigungselement 52 und einen das Befestigungselement umgebenden Gleitschuh 54. Das Befestigungselement 52 fixiert den Gleitschuh 54 am Untergrund 28. Der Gleitschuh weist auf seiner dem Untergrund 28 gegenüberliegenden Seite über die Ränder der Aufnahmeöffnung 50 hinausragende Arme auf und ist in der Aufnahmeöffnung 50 mit Spiel aufgenommen. Durch diese Konstruktion, die in der am 26.7.2000 eingereichten EP-Anmeldung Nr. 00810663.5. Fig. 2a bis 6b und der zugehörigen Beschreibung im einzelnen beschrieben ist, ist es möglich, dass der zweite Fuss 32 im Bereich des durch das Spiel definierten Weges gegenüber dem Untergrund 28 verschieben kann und dennoch genügend fest mit dem Untergrund verbunden ist.

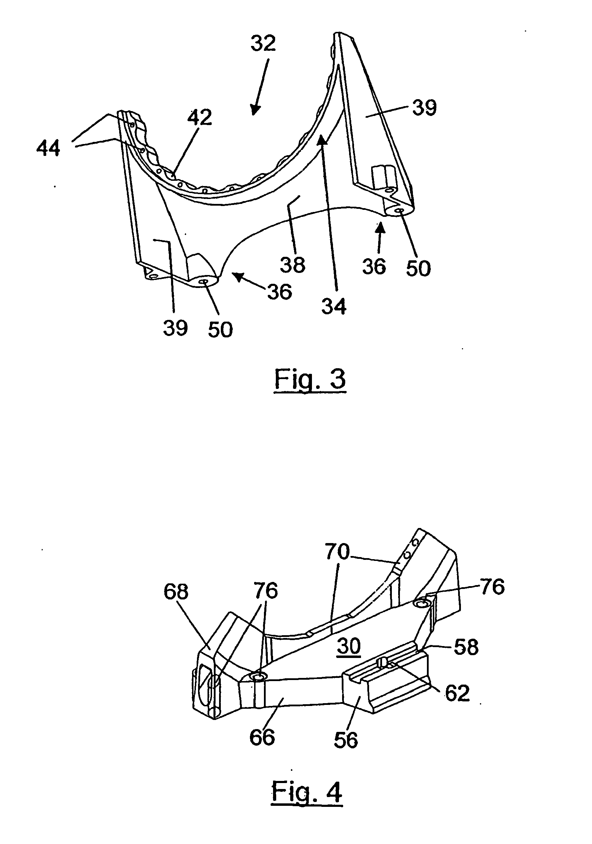

Der erste Fuss 30 ist im Detail in Fig. 4 dargestellt. Er weist ein Verbindungselement 56 mit einer Nut 58 auf die zur axialen Fixierung des Turboladers 12 mit einer am Gasaustrittsgehäuse 22 angeordneten Fixierleiste 60 zusammenwirkt (vgl. Fig. 1 und 2) Zusätzlich ist im Verbindungselement 56 ein Loch 62 angeordnet, das mit einem entsprechenden Loch 62' in Gasaustrittsgehäuse 22 korrespondiert. Die beiden Löcher 62, 62' sind zur Aufnahme eines Befestigungskörpers 64 vorgesehen. Das Verbindungselement 56 ist mittels eines Verbindungskörpers 66 mit einem Aufnahmesattel 68 verbunden. Der Aufnahmesattel 68 weist Lagerflächen 70 auf, auf denen die Verdichterseite des Gasaustrittsgehäuses 22 gleitend gelagert ist. In dem in den Fig. 1 und 2 gezeigten Beispiel weist das Gasaustrittsgehäuse 22 einen extra hierfür ausgebildeten Lagerflansch 72 auf. Mit Fixiermitteln 74, die durch entsprechende Öffnungen 76 geführt sind, ist der erste Fuss 30 ortsfest am Untergrund 28 befestigt. Damit auch der erste Fuss 30 in beliebiger Position am Turboladergehäuse 14 befestigt werden kann, sind auch der Lagerflansch und die Fixierleiste wenn möglich einen 360°-Bogen beschreibend ausgebildet. Es versteht sich, dass diese im Detail beschriebene Ausführungsform des ersten Fusses 30 keine beschränkende Wirkung hat und auch analoge Ausbildungen möglich sind. Statt der Nut 58 und der Fixierleiste 60, können so beispielsweise auch Vertiefungen oder Löcher mit Kreisquerschnitt oder Polygonquerschnitt mit am Umfang des Gasaustrittsgehäuses 22 angeordneten, gegengleich ausgebildeten Zapfen zusammenwirken. Die Löcher 62, 62' und das Fixiermittel 74 können anders ausgestaltet oder sogar weggelassen sein.

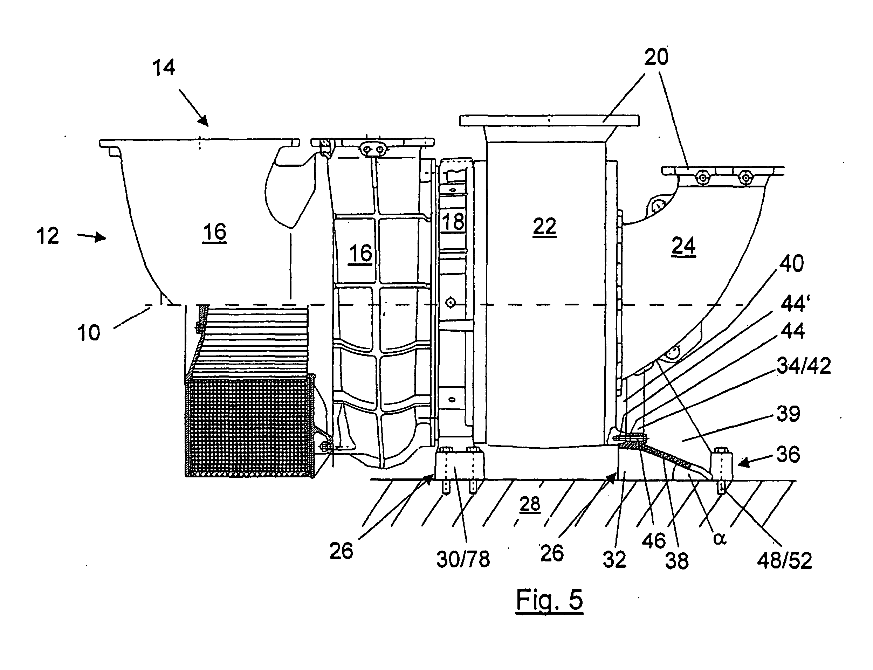

Der erste Fuss 30' kann auch statt am Gasaustrittsgehäuse 22 am Lagergehäuse 18 angeordnet sein, wie dies in Fig. 5 dargestellt ist. Fig. 5 entspricht mit Ausnahme des ersten Fusses 30 der Befestigungsvorrichtung 26 der Darstellung aus Fig. 1. Ein in der gezeigten Form als Lagerfuss 78 ausgebildeter erster Fuss 30', kann dann bekannter Form ausgestaltet sein, wie dies beispielsweise im Prospekt H420-42TU11 E1-A-0, (1,0) 98-3 R, S. 6, von Mitsubishi Heavy Industries, Ltd. und in DE-A1-199 25 684 dargestellt ist.

### Bezugszeichenliste

- 10: Längsachse
- 12: Turbolader
- 14: Turboladergehäuse
- 16: Verdichtergehäuse
- 18: Lagergehäuse
- 20: Turbinengehäuse
- 22: Gasaustrittsgehäuse
- 24: Gaseintrittsgehäuse
- 26: Befestigungsvorrichtung
- 28: Untergrund
- 30: erster Fuss
- 32: zweiter Fuss
- 34: Gehäuseverbindungsbereich
- 36: Untergrundverbindungsbereich
- 38: Axialverstrebung
- 40: Verbindungsflansch
- 42: Anschlag
- 44, 44': Öffnungen
- 46: Fixierelemente
- 48: Befestigungsmittel
- 50: Aufnahmeöffnungen
- 52: Befestigungselement
- 54: Gleitschuh
- 56: Verbindungselement
- 58: Nut
- 60: Fixierleiste
- 62, 62': Loch
- 64: Befestigungskörper
- 66: Verbindungskörper
- 68: Aufnahmesattel
- 70: Lagerfläche
- 72: Lagerflansch
- 74: Fixiermittel
- 76: Öffnung
- 78: Lagerfuss

## Patentansprüche

1. Befestigungsvorrichtung zur Befestigung eines ein Turboladergehäuse umfassenden Turboladers an einem Untergrund mit einem ersten und einem zweiten im Untergrund fixierbaren Fuss, wobei die beiden Füsse axial voneinander beabstandet mit dem Turboladergehäuse verbindbar sind und der zweite Fuss (32) einen Gehäuseverbindungsbereich (34), der mit dem Turboladergehäuse (14) verbindbar ist und in Form zumindest eines Teilkreisbogens ausgebildet ist, einen axial vom Gehäuseverbindungsbereich (34) beabstandeten Untergrundverbindungsbereich (36), der mit dem Untergrund (28) verbindbar ist, sowie eine Axialverstrebung (38), welche die beiden Verbindungsbereiche (34, 36) miteinander verbindet und mit dem Untergrund (28) einen Winkel α einschliesst, der im Bereich von 0° bis 60 ° liegt, umfasst, **dadurch gekennzeichnet, dass** der Gehäuseverbindungsbereich (34) einen kreisbogenförmigen Axialanschlag (42) umfasst, welcher mit dem Turboladergehäuse (14) in axialer Richtung formschlüssig verbindbar ist.

2. Befestigungsvorrichtung nach Anspruch 1, **dadurch gekennzeichnet, dass** der Gehäuseverbindungsbereich (34) einen Teilkreisbogen von mindestens 90°, vorzugsweise von 180° ± 30° beschreibt und, dass der Untergrundverbindungsbereich (36) insbesondere auf der dem ersten Fuss (30) entgegengesetzten Seite des Gehäuseverbindungsbereichs (34) angeordnet ist.

3. Befestigungsvorrichtung nach Anspruch 1 oder 2, **dadurch gekennzeichnet, dass** das Turboladergehäuse (14) einen Verbindungsflansch (40) aufweist, dessen Aussenradius dem Radius des Teilkreis- oder Kreisbogens des Gehäuseverbindungsbereichs (34) entspricht, so dass der Verbindungsflansch (40) und der Gehäuseverbindungsbereich (34) formschlüssig ineinander greifen, und dass der Gehäuseverbindungsbereich (34) und das Turboladergehäuse (14) mittels gleichmässig über den Teilkreisbogen bzw. Kreisbogen verteilten Fixierelementen (46) gegeneinander fixiert sind.

4. Befestigungsvorrichtung nach einem der Ansprüche 1 bis 3, **dadurch gekennzeichnet, dass** der zweite Fuss (32) Seitenverstrebungen (39) aufweist, welche beidseitig der Längsachse (10) des Turboladers (12) am kreisbogenförmigen Gehäuseverbindungsbereich (34) angreifen und sich, eine Abstützung bildend, bis zum Untergrund (28) erstrecken.

5. Befestigungsvorrichtung nach Anspruch 4, **dadurch gekennzeichnet, dass** die Seitenverstrebungen (39) den Gehäuseverbindungsbereich (34) mit dem Untergrundverbindungsbereich (36) verbinden und vorzugsweise plattenförmig ausgebildet sind.

6. Befestigungsvorrichtung nach Anspruch 4 oder 5, **dadurch gekennzeichnet, dass** die Axialverstrebung (38) so ausgebildet ist, dass sie seitlich jeweils über ihre gesamte axiale Länge mit der jeweiligen Seitenverstrebung (39) verbunden ist.

7. Befestigungsvorrichtung nach einem der vorhergehenden Ansprüche, **dadurch gekennzeichnet, dass** die Axialverstrebung (38) in Form einer schalenartigen Verstrebungsplatte ausgebildet ist, deren Querschnitt im Gehäuseverbindungsbereich (34) den Teilkreisbogen bzw. Kreisbogen des Gehäuseverbindungsbereichs (34) nachzeichnet und deren Querschnitt im Bereich das Untergrundverbindungsbereichs (36) vorzugsweise etwa eine Gerade beschreibt.

8. Befestigungsvorrichtung nach einem der vorhergehenden Ansprüche, **dadurch gekennzeichnet, dass** der zweite Fuss (32) mit Hilfe von Befestigungsmitteln (48) derart mit dem Untergrund (28) verbunden ist, dass der zweite Fuss (32) gegenüber dem Untergrund (28) zumindest axial im Bereich eines definierten Weges verschiebbar ist.

9. Befestigungsvorrichtung nach Anspruch 8, **dadurch gekennzeichnet, dass** der Untergrundverbindungsbereich (36) Aufnahmeöffnungen (50) für die spielbehaftete Aufnahme eines Befestigungsmittels (48) aufweist, wobei das Befestigungsmittel (48) ein im Untergrund (28) fixierbares Befestigungselement (52) und einen das Befestigungselement (52) umgebenden Gleitschuh (54) umfasst.

10. Befestigungsvorrichtung nach einem der vorhergehenden Ansprüche, **dadurch gekennzeichnet, dass** das Turboladergehäuse (14) entlang seiner Längsachse (10) ein Verdichtergehäuse (16) und ein Turbinengehäuse (20) mit einem Gaseintrittsgehäuse (22) und einem Gasaustrittsgehäuse (24) umfasst und zur Befestigung des Turboladers (12) der zweite Fuss (32) in Richtung Gaseintrittsgehäuse (24) beabstandet vom ersten Fuss angeordnet und insbesondere turbinenseitig mit dem Gasaustrittsgehäuse (22) verbanden ist.

11. Befestigungsvorrichtung nach Anspruch 10, **dadurch gekennzeichnet, dass** der erste Fuss (30) verdichterseitig mit dem Gasaustrittsgehäuse (22) verbunden ist.

12. Befestigungsvorrichtung nach Anspruch 11, **dadurch gekennzeichnet, dass** der erste Fuss (30) ein Verbindungselement (56) aufweist welches mit dem Gasaustrittsgehäuse (22) verbunden ist und das Gasaustrittsgehäuse (22) axial fixiert, und wobei das Verbindungselement (56) verdichterseitig vorzugsweise mit einem Aufnahmesattel (68) verbunden ist, auf dem eine Verdichterseite des Gasaustrittsgehäuses (22) gleitend abgestützt ist.

13. Befestigungsvorrichtung nach Anspruch 10, **dadurch gekennzeichnet, dass** der erste Fuss (30) als Lagerfuss (78) ausgebildet ist, der mit einem zwischen dem Turbinengehäuse (20) und dem Verdichtergehäuse (16) angeordneten Lagergehäuse (18) verbunden ist.

## Claims

1. Fastening device for fastening a turbocharger comprising a turbocharger housing to a base by means of a first and a second foot fixable in the base, the two feet being connectable, spaced apart from one another axially, to the turbocharger housing, and the second foot (32) comprising a housing connection region (34) which is connectable to the turbocharger housing (14) and is designed in the form of at least one part-circle arc, a base connection region (36) spaced axially apart from the housing connection region (34) and connectable to the base (28), and an axial bracing (38) which connects the two connection regions (34, 36) to one another and which forms with the base (28) an angle α which lies in the range of 0° to 60°, **characterized in that** the housing connection region (34) comprises a circular-arcuate axial stop (42) which can be positively connected to the turbocharger housing (14) in the axial direction.

2. Fastening device according to Claim 1, **characterized in that** the housing connection region (34) describes a part-circle arc of at least 90°, preferably of 180° ± 30°, and **in that** the base connection region (36) is arranged, in particular, on that side of the housing connection region (34) which is opposite the first foot (30).

3. Fastening device according to Claim 1 or 2, **characterized in that** the turbocharger housing (14) has a connecting flange (40), the outer radius of which corresponds to the radius of the part-circle or circle arc of the housing connection region (34), so that the connecting flange (40) and the housing connection region (34) engage positively one in the other, and **in that** the housing connection region (34) and the turbocharger housing (14) are fixed with respect to one another by means of fixing elements (46) distributed uniformly over the part-circle arc or circle arc.

4. Fastening device according to one of Claims 1 to 3, **characterized in that** the second foot (32) has side bracings (39) which engage on the circular-arcuate housing connection region (34) on both sides of the longitudinal axis (10) of the turbocharger (12) and which, forming a support, extend as far as the base (28).

5. Fastening device according to Claim 4, **characterized in that** the side bracings (39) connect the housing connection region (34) to the base connection region (36) and are preferably of plate-shaped design.

6. Fastening device according to Claim 4 or 5, **characterized in that** the axial bracing (38) is designed so that it is connected laterally, in each case over its entire axial length, to the respective side bracing (39).

7. Fastening device according to one of the preceding claims, **characterized in that** the axial bracing (38) is designed in the form of a shell-like bracing plate, of which the cross section in the housing connection region (34) traces the part-circle arc or circle arc of the housing connection region (34) and of which the cross section in the region of the base connection region (36) preferably describes approximately a straight line.

8. Fastening device according to one of the preceding claims, **characterized in that** the second foot (32) is connected to the base (28) with the aid of fastening means (48) in such a way that the second foot (32) can be displaced at least axially with respect to the base (28) over the range of a defined travel.

9. Fastening device according to Claim 8, **characterized in that** the base connection region (36) has reception orifices (50) for the play-encumbered reception of a fastening means (48), the fastening means (48) comprising a fastening element (52) fixable in the base (28) and a sliding shoe (54) surrounding the fastening element (52).

10. Fastening device according to one of the preceding claims, **characterized in that** the turbocharger housing (14) comprises along its longitudinal axis (10) a compressor housing (16) and a turbine housing (20) with a gas inlet housing (22) and with a gas outlet housing (24) and, to fasten the turbocharger (12), the second foot (32) is arranged spaced apart from the first foot in the direction of the gas inlet housing (24), and, in particular, is connected to the gas outlet housing (22) on the turbine side.

11. Fastening device according to Claim 10, **characterized in that** the first foot (30) is connected to the gas outlet housing (22) on the compressor side.

12. Fastening device according to Claim 11, **characterized in that** the first foot (30) has a connecting element (56) which is connected to the gas outlet housing (22) and which fixes the gas outlet housing (22) axially, and the connecting element (56) being preferably connected on the compressor side to a reception saddle (68), on which a compressor side of the gas outlet housing (22) is supported slideably.

13. Fastening device according to Claim 10, **characterized in that** the first foot (30) is designed as a bearing foot (78) which is connected to a bearing housing (18) arranged between the turbine housing (20) and the compressor housing (16).

## Revendications

1. Dispositif de fixation pour la fixation d'un boîtier de turbocompresseur, comprenant un turbocompresseur sur une base, avec un premier et un deuxième pied pouvant être fixés dans la base, les deux pieds étant espacés axialement l'un de l'autre et pouvant être connectés au boîtier de turbocompresseur, et le deuxième pied (32) comprenant une région de connexion au boîtier (34) qui peut être connectée au boîtier du turbocompresseur (14) et qui est réalisée en forme d'au moins un arc de cercle partiel, une région de connexion à la base (36) espacée de la région de connexion au boîtier (34), qui peut être connectée à la base (28), ainsi qu'une entretoise axiale (38) qui relie entre elles les deux régions de connexion (34, 36), et qui forme avec la base (28) un angle α, qui est compris dans la plage de 0° à 60°, **caractérisé en ce que** la région de connexion au boîtier (34) présente une butée axiale (42) en forme d'arc de cercle qui peut être connectée par engagement par correspondance géométrique dans la direction axiale au boîtier de turbocompresseur (14).

2. Dispositif de fixation selon la revendication 1, **caractérisé en ce que** la région de connexion au boîtier (34) décrit un arc de cercle partiel d'au moins 90°, de préférence de 180° ± 30°, et **en ce que** la région de connexion à la base (36) est disposée notamment sur le côté de la région de connexion au boîtier (34) qui est opposé au premier pied (30).

3. Dispositif de fixation selon la revendication 1 ou 2, **caractérisé en ce que** le boîtier de turbocompresseur (14) présente un bride de connexion (40) dont le rayon extérieur correspond au rayon de l'arc de cercle partiel ou de l'arc de cercle de la région de connexion au boîtier (34), de sorte que la bride de connexion (40) et la région de connexion au boîtier (34) s'engagent l'une dans l'autre par engagement par correspondance géométrique, et que la région de connexion au boîtier (34) et le boîtier de turbocompresseur (14) soient fixés l'un contre l'autre au moyen d'éléments de fixation (46) répartis uniformément sur l'arc de cercle partiel ou sur l'arc de cercle.

4. Dispositif de fixation selon l'une quelconque des revendications 1 à 3, **caractérisé en ce que** le deuxième pied (32) présente des entretoises latérales (39) qui viennent en prise des deux côtés de l'axe longitudinal (10) du turbocompresseur (12) sur la région de connexion au boîtier (34) en forme d'arc de cercle, et qui s'étendent jusqu'à la base (28) en formant un support.

5. Dispositif de fixation selon la revendication 4, **caractérisé en ce que** les entretoises latérales (39) relient la région de connexion au boîtier (34) à la région de connexion à la base (36) et sont de préférence réalisées en forme de plaque.

6. Dispositif de fixation selon la revendication 4 ou 5, **caractérisé en ce que** l'entretoise axiale (38) est réalisée de telle sorte qu'elle soit connectée à chaque fois latéralement sur toute sa longueur axiale à l'entretoise latérale respective (39).

7. Dispositif de fixation selon l'une quelconque des revendications précédentes, **caractérisé en ce que** l'entretoise axiale (38) est réalisée en forme de plaque d'entretoise en forme de coque, dont la section transversale reproduit dans la région de connexion au boîtier (34) l'arc de cercle partiel ou l'arc de cercle de la région de connexion au boîtier (34) et dont la section transversale dans la région de connexion à la base (36) décrit de préférence approximativement une droite.

8. Dispositif de fixation selon l'une quelconque des revendications précédentes, **caractérisé en ce que** le deuxième pied (32) est connecté à la base (28) à l'aide de moyens de fixations (48) de telle sorte que le deuxième pied (32) puisse être déplacé par rapport à la base (28) au moins axialement dans la région d'une trajectoire définie.

9. Dispositif de fixation selon la revendication 8, **caractérisé en ce que** la région de connexion à la base (36) présente des ouvertures de réception (50) pour recevoir avec jeu un moyen de fixation (48), le moyen de fixation (48) comprenant un élément de fixation (52) pouvant être fixé dans la base (28) et un patin coulissant (54) entourant l'élément de fixation (52).

10. Dispositif de fixation selon l'une quelconque des revendications précédentes, **caractérisé en ce que** le boîtier de turbocompresseur (14) comprend le long de son axe longitudinal (10) un boîtier de compresseur (16) et un boîtier de turbine (20) avec un boîtier d'entrée de gaz (22) et un boîtier de sortie de gaz (24) et pour la fixation du turbocompresseur (12), le deuxième pied (32) est disposé dans la région du boîtier d'entrée de gaz (24) à distance du premier pied et est notamment connecté du côté de la turbine au boîtier de sortie de gaz (22).

11. Dispositif de fixation selon la revendication 10, **caractérisé en ce que** le premier pied (30) est connecté du côté du compresseur au boîtier de sortie de gaz (22).

12. Dispositif de fixation selon la revendication 11, **caractérisé en ce que** le premier pied (30) présente un élément de connexion (56) qui est connecté au boîtier de sortie de gaz (22) et qui fixe axialement le boîtier de sortie de gaz (22), l'élément de connexion (56) étant connecté du côté du compresseur de préférence à une sellette de réception (68) sur laquelle est supporté par glissement un côté compresseur du boîtier de sortie de gaz (22).

13. Dispositif de fixation selon la revendication 10, **caractérisé en ce que** le premier pied (30) est réalisé sous forme de pied de palier (78) qui est connecté à un boîtier de palier (18) disposé entre le boîtier de turbine (20) et le boîtier de compresseur (16).
